# EUROPEAN PATENT SPECIFICATION

(11) **EP 2 493 327 B1**
(45) Date of publication and mention of the grant of the patent: **22.02.2017**
(21) Application number: 10773946.8
(22) Date of filing: 21.10.2010
(51) Int. Cl.: A23D 7/005, A23D 7/01

(54) **SPRAYABLE LIQUID EDIBLE COMPOSITIONS**
SPRÜHBARE ESSBARE FLÜSSIGZUSAMMENSETZUNGEN
COMPOSITIONS COMESTIBLES LIQUIDES PULVÉRISABLES

(30) Priority: 28.10.2009 GB 0918908; 28.10.2009 GB 0918911
(43) Date of publication of application: 05.09.2012
(73) Proprietor: MH Foods Limited, Esher, Surrey KT10 9PN (GB)
(72) Inventor: MUSSAWIR-KEY, Frederick, Wade, Erith Kent DA8 2JA (GB)
(74) Representative: Swindell & Pearson Limited
(86) International application number: PCT/GB2010/001945
(87) International publication number: WO 2011/051654

(56) References cited:
- US-A- 4 142 003
- US-A- 6 113 970
- US-A1- 2004 109 930
- US-A1- 2008 044 523
- PAN L G ET AL: "OIL-IN-WATER EMULSIONS FORMULATED WITH SUNFLOWER LECITHINS: VESICLE FORMATION AND STABILITY", JOURNAL OF THE AMERICAN OIL CHEMISTS' SOCIETY, SPRINGER, BERLIN, DE, vol. 81, no. 3, 1 March 2004 (2004-03-01), pages 241-244, XP001537920, ISSN: 0003-021X, DOI: DOI:10.1007/S11746-004-0889-4
- HOLLO J ET AL: "SUNFLOWER LECITHIN AND POSSIBILITIES FOR UTILIZATION", JOURNAL OF THE AMERICAN OIL CHEMISTS' SOCIETY, SPRINGER, BERLIN, DE, vol. 70, no. 10, 1 October 1993 (1993-10-01), pages 997-1001, XP000403777, ISSN: 0003-021X, DOI: DOI:10.1007/BF02543026

## Description

The present invention relates to sprayable liquid edible compositions and in particular but not exclusively to sprayable non-stick cooking compositions.

Sprayable liquid edible compositions and the technology behind such compositions have been considered in the past. LG Pan et al published in a paper called "Oil-in-water emulsions formulated with sunflower lecithins; vesicle formation and stability" (Journal of the American Oil Chemists' Society, Springer, Berlin, De, vol. 81, no.3, 1 March 2004) discusses oil in water in emulsions formulated with sunflower lecithin and studied the vesicles formed therein. The study considered the effects of change of concentration of lecithin. The study did not, however, arrive at any specific compositions that might be used as sprayable liquid edible compositions.

US Patent No. 6113970 (Rainey Et Al) discloses a sprayable liquid edible composition comprising of oil phase including lecithin, emulsifier and aqueous phase comprising an acidifier and water. The composition resultant from US Patent No. 6113970 is not considered to have as desirable properties as the composition of the present invention.

Holló J Et Al published a paper called "sunflower lecithin and possibilities for utilization" in the journal of the American Oil Chemists' Society, Springer, Berlin, De, vol. 70, no. 10, 1 October 1993. This paper discusses the nature of sunflower lecithin the paper does not, however, address the composition of sprayable liquid edible compositions.

US Patent No. 4142003 (Sejpal) is concerned with non- aerosol vegetable oil containing soya lecithin and pure ethanol alcohol. The aim of US Patent No. 4142003 in to produce a vegetable oil containing relatively high level concentrations of lecithin but with a low viscosity. The alcohol is used to reduce the viscosity. The patent is further aimed at producing a composition with no or a very low quantity of water therein.

US Patent No. 2008/0044523 (Paul) discloses a sprayable liquid edible composition comprising a lecithin, an oil phase, an aqueous phase and an alcohol.

According to the present invention there is provided a sprayable liquid edible composition comprising an oil component in an amount 0.1% to 70%, an aqueous component in an amount 25% to 98.9%, a sunflower lecithin component in an amount 0.1% to 15% and about 8% to 12% by volume over weight (v/w) of the aquous component of alcohol and the alcohol comprising no more than 5% v/w of the composition.

Within this specification the percentages referred to are the percentage by weight of the total composition, unless explicitly stated otherwise. Pressure dependent measurements within this specification are all taken under typical atmospheric pressure conditions generally at sea level (1 Bar).

The sunflower lecithin component may comprise natural and/or synthetic sunflower lecithin and/or a modification, derivative or compound thereof. The sunflower lecithin component may comprise one or more of hydrolysed, hydroxylated, acetylated or methoxylated sunflower lecithin. The sunflower lecithin component may be liquid, particularly at temperatures between 10°C and 25°C. Alternatively, the sunflower lecithin component may be non-liquid at temperatures between 10°C and 25°C, and may be in the form of a paste. The sunflower lecithin component may be de-oiled and may be powdered. The sunflower lecithin component may comprise a combination of various forms, types and derivatives of sunflower lecithin.

The sunflower lecithin component may be present in an amount between 1% and 10%, and in certain embodiments between 2% and 6% by weight of the composition.

The sunflower lecithin component may have a phosphatidylcholine content of between 15% and 30%.

The sunflower lecithin component preferably acts as a non-stick agent within the composition, enabling the composition to be used as a sprayable non-stick cooking composition finding particular application in cooking techniques such as frying, in particular shallow frying, roasting, sautéing and the like. The compositions also find application as a non-stick release agent in baking. The sunflower lecithin component may comprise one or more further non-stick agents, such as one or more further lecithin's and/or modifications and derivatives thereof. The sunflower lecithin component may act as an emulsifier, thus facilitating the creation and maintenance of the composition emulsion.

The composition may also find application in non-cooking situations, such as the application to foods such as cooked pasta and rice, to prevent sticking between the food particles or grains.

The oil component may comprise any edible liquid oil, including one or more of plant derived and/or animal derived oil or fat such as vegetable oil, olive oil, extra virgin olive oil, virgin olive oil, refined olive oil, blended olive oils, rapeseed oil, sunflower oil, soy bean oil, canola oil, cotton seed oil, corn oil, ground nut oil, grapeseed oil, ghee, safflower oil, flax oil, hemp oil, borage oil, avocado oil, pumpkin oil, wheatgerm oil, evening primrose oil, starflower oil, fractionated oil such as medium chain triglycerides, refined fractions of mineral oil or any other plant derived oil and/or their fractions. Such oils are typically liquid from at least 7°C up to their boiling or smoking point. Importantly, the oils are liquid at typical temperatures at which the compositions are sprayed for use, which is typically ambient room temperature (10°C to 50°C). The oil component may comprise small levels of vegetable shortenings, butter, butter oil, hydrogenated fats and/or oils, partially hydrogenated oils and/or fats such as palm oil and/or its fractions, coconut oil and/or its fractions and fatty acids such as palmitic acid and palmitates. The oil component may include all oils present in the composition, and may have at least in part the sunflower lecithin component dissolved therein.

The oil component may comprise between 0.1% and 10% by weight of the composition, and may be between 4% and 6% by weight. In alternative embodiments, the oil component may comprise between 10% and 60% by weight of the composition, and in further embodiments between 50% and 60% by weight.

In certain embodiments, the aqueous component may comprise between 30% and 80% by weight of the composition. In particular embodiments, the aqueous component may comprise between 30% and 60% by weight of the composition, and in still further embodiments between 75% and 90% by weight of the composition.

The aqueous component may be water or may comprise between 40% and 99% water, and may be between 40% and 60% water.

The aqueous component may contain water soluble or generally water soluble components of the composition.

The sunflower lecithin component may be dissolved, at least in part, in the oil component. Alternatively or in addition, some or all of the sunflower lecithin component may be dissolved in the aqueous component. For example, some lecithins such as de-oiled lecithin can dissolve or disperse within the aqueous component or the oil component.

The composition is preferably sprayable at temperatures of 5°C or above, and desirably at temperatures between 10°C and 50°C. Preferably, the composition is sprayable at normal or typical household or kitchen room temperatures, the locations at which the compositions are most likely to be used. The above temperatures are considered typical household or kitchen room temperatures, but it will be appreciated that in certain environments the temperatures may be slightly above or below these.

The composition may have a viscosity of between 0.65 Pa*S (650 centipoise) and 1.35 Pa*S (1350 centipoise), and in certain embodiments between 0.65 Pa*S (650 centipoise) and 1.15 Pa*S (1150 centipoise) at 20°C (68°F), in others between 0.85 Pa*S (850 centipoise) and 1.35 Pa*S (1350 centipoise), in others between 0.75 Pa*S (750 centipoise) and 1.25 Pa*S (1250 centipoise) at 20°C (68°F) and in others between 1 Pa*S (1000 centipoise) and 1.175 Pa*S (1175 centipoise). All of these are at a temperature of 20°C.

The composition may comprise a generally homogenous emulsion. The sunflower lecithin component may act as an emulsifier within the composition.

The composition may comprise a culinary salt component present in an amount between 0.1% and 25% by weight of the aqueous component. The culinary salt component may comprise sodium chloride or a composition comprised in part and desirably predominantly of sodium chloride. The culinary salt component may comprise potassium chloride and/or any other edible chloride or salt substitute such as calcium gluconate. The culinary salt component may comprise a mixture of sodium chloride and potassium chloride, with or without other components such as anti-caking agent. The culinary salt component may comprise between 2% and 8% by weight of the aqueous component. The culinary salt component may comprise up to 10% by weight of the compositions. The salt component may comprise up to 25% by weight sodium chloride, sodium chloride substitute, such as potassium chloride, calcium chloride or a combination thereof, and may be in the form of a solution. The salt component, in particular the chlorides, can act as preservative and flavouring within the compositions.

The composition may comprise an acidic component in an amount between 0.01% and 5% by weight of the aqueous component. The acidic component may comprise an acidulant such as a food grade acid, such as acetic acid, lactic acid or other acid permitted for such use under relevant law, such as phosphoric acid, hydrochloric acid. The acid component may be 100% acid or may be diluted, such as to between 80% and 99% purity. The acidic component may comprise between 0.5% and 3% by weight, and in certain embodiments between 0.5% and 4.5% by weight of the aqueous component particularly when of between 80% and 100% purity or concentration. In certain embodiments the acidic component may comprise between 0.01% and 1%, or 0.9% and 2.5% when 100% acidic. Acetic acid has advantageous properties of flavour, pH lowering and preservative. Other acidulants are mainly used for flavouring and pH lowering as required.

The acidic component may comprise a diluted acidic substance such as a vinegar and/or citric fruit juice such as lemon and lime juice, in which case the amount of acidic component comprised in the composition would be proportionately greater to compensate for the degree of dilution to achieve the same desired pH.

The composition may have a pH of 4.5 or less at 20°C. The composition may have a pH of 3.9 or less at 20°C. The composition may have a pH of between 3 and 3.9 at 20°C. The composition may have a pH of between 2.8 and 4.2 at 20°C.

The presence of the salt component and/or the acidic component, particularly acetic acid, provides the composition with good self-preservation characteristics, helping to prevent or hinder spoilage of the composition, and particularly the spoilage of the aqueous component by micro organism and yeast infection. In such embodiments of the invention there is typically no need for the composition to be subjected to conventional preservation techniques such as pasteurisation, sterilisation and irradiation. This gives the edible compositions of the present invention particular advantage over known compositions, such as ease, simplicity and relative low cost of manufacture (no sterilisation or preservation stages or plant, machines or substances required), packaging and the like.

The composition comprises alcohol, primarily as a preservative for the aqueous component. The alcohol may be provided instead of or alongside one or more of the acidic component and culinary salt component. The alcohol may comprise pure alcohol or may be diluted alcohol, such as 5% to 99% v/w alcohol. The alcohol may be substantially comprised in the aqueous component.

In certain embodiments, the composition may be subjected to preservation treatments such as by one or more of irradiation, pasteurisation, sterilisation, ultra pressure, chemical preservation such as using benzoic acid, sorbic acid (or other of their salts and compounds), potassium sorbate, sulphur dioxide, such as sulphites, bisulphites or its compounds, and any other suitable method and aseptic filling.

The composition may comprise an emulsifier present in an amount between 0.1% and 15% by weight of the composition and desirably in an amount 2% to 5% by weight of the composition. The emulsifier may comprise a single type of emulsifier or may comprise a combination of one or more emulsifiers. The emulsifier may comprise a sugar ester, such as a sucrose ester or a derivative thereof, or any other suitable emulsifier.

The composition may comprise further components, such as one or more of flavouring, flavour intensifier, flavour modifier, preservative, colouring, antioxidant (such as Vitamin C and its compounds, tocopherol, gallate, BHA, BHT, BHQ), stabiliser, thickener, spice extract, acidity regulator, seasoning, aromatic, herb extract, plant extract, rosemary extract, green tea extract, tannic acid, chelating agent (such as EDTA and/or compounds, salts or derivatives of EDTA, citric acid), anti-mould and anti-bacterial agent.

According to a further aspect of the present invention, there is provided a method of dispensing a sprayable liquid edible composition as described above, the method comprising spraying a predetermined amount of composition with a known calorific content.

According to a still further aspect of the present invention, there is provided a dispenser containing a bulk supply of sprayable liquid edible composition as described in any of the paragraphs above, the dispenser being arranged to spray upon actuation a predetermined amount of composition with a known calorific content.

Embodiments of the present invention will now be described by way of example only.

There is provided a sprayable liquid edible composition comprising an oil component in an amount between 0.1% and 70%, an aqueous component in an amount 25% to 98.9%, a sunflower lecithin component in an amount 0.1% to 15% and about 8% to 12% by volume over weight (v/w) of the aqueous component of alcohol and the alcohol comprising no more than 5% v/w of the composition.

The sprayable liquid edible compositions of the present invention find particular application as sprayable non-stick cooking compositions, particularly for domestic but also for commercial use. In addition the compositions find application in non-cooking situations, such for helping to prevent foodstuffs from sticking to themselves, to containers, implements and packaging and as general lubricants. The sunflower lecithin component acts primarily as a non-stick agent and lubricant.

Conventionally soya lecithin has been used in the manufacture of certain food products, utilising its non-stick properties. However, soya lecithin suffers from potentially presenting concerns as an allergen that could restrict its customer appeal use. Soya derived products can also raise concerns with potential consumers as soya is known to be available or sourced from predominantly genetically modified sources.

Other forms of lecithin that are commercially available are rapeseed and canola lecithin. Again these can attract concern from consumers due to potential allergen concern and genetic modification issues.

The selection of the use of sunflower lecithin in the present invention provides significant advantages over the aforesaid known lecithins. Sunflower lecithin has no known allergenic properties. It has also been found by the inventor that sunflower lecithin can help to significantly reduce the viscosity of the composition, helping to improve the spray characteristics.

Surprisingly, it has also been found by the inventor that sunflower lecithin has unexpectedly good emulsifying effects and therefore stabilising effects on the composition, enabling the emulsion to remain in a stable and generally homogenous state to a significantly greater extent than corresponding compositions comprising conventional soya lecithin or rapeseed lecithin, over longer periods of time. Compositions made according to the same formula, other than replacing conventional lecithin content with the equivalent amount of sunflower lecithin, using the same manufacturing processes, have been found to have better stability (and thus improved shelf life), are generally more resistant to the separation of the oily and aqueous components, and exhibit improved spray characteristics, such as ease of spray and consistency of spray.

In certain embodiments the sunflower lecithin component is present in an amount between 1% and 10% by weight of the total composition. In still further embodiments, the sunflower lecithin component is present in amounts between 2% and 6% by weight of the composition.

It has been found that when the sunflower lecithin component is present at between 2% and 6% by weight, the aforesaid advantages can be enjoyed, whilst the compositions are considered to particularly retain an overall visual and organoleptic quality for consumers, good cooking and non-stick properties, and an efficient and cost effective composition for manufacture. The stability of the emulsions of the compositions of the present invention enable the compositions to retain a homogenous state for significantly longer periods of time than equivalent compositions comprising conventional soya lecithin or rapeseed lecithin, thus enabling the potential for fixed quantities to be repeatedly dispensed as described herein, in which quantities the number of calories (kcal) can be reliably known. This can help a user calculate and understand the number of calories being added to the foodstuff.

The sunflower lecithin component used can consist of natural and/or synthetic sunflower lecithin and/or a physical and/or chemical modification, derivative or compound thereof. Particular modified forms of sunflower lecithin that can be used include hydrolysed, hydroxylated, acetylated and/or methoxylated sunflower lecithin. In certain embodiments the lecithin component is liquid, at least at temperatures between 10°C and 50°C. In other embodiments the sunflower lecithin component is non-liquid, such as a paste or particulate. In certain embodiments the sunflower lecithin component can be de-oiled, which may be liquid, paste, granular and/or powdered. In certain embodiments the sunflower lecithin component comprises a combination of various forms, types and derivatives of sunflower lecithin and can comprise sunflower lecithin with other substances such as one or more other lecithins, oil, preservatives, antioxidants, water and so on.

When the form of sunflower lecithin component used is predominantly hydrophillic, eg de-oiled, then the component is generally soluble or dispersible within the aqueous component.

Typically the sunflower lecithin used in the sunflower lecithin component has a phosphatidylcholine content of between 15% and 30% and in certain embodiments approximately 25% of the total phospholipid content of the component. The sunflower lecithin component may have a linoleic acid content in the order of 65% to 75% and typically about 69% of the total fatty acid content of the sunflower lecithin component. The sunflower lecithin component may have a palmitic acid content in the order 10% to 20% and typically 15% of the total fatty acid content of the sunflower lecithin component. These percentages are typical for liquid, non-de-oiled lecithin. De-oiled sunflower lecithin will tend to have a greater percentage by weight of these components, proportionate to the amount of oil removed from the lecithin.

In certain embodiments, the sunflower lecithin component comprises one or more further non-stick agents, such as one or more further lecithins and/or modifications and/or derivatives thereof, such as hydrolysed, methoxylated, acetylated and/or hydroxylated forms.

The oil component can comprise any suitable animal and/or vegetable derived oil or fat, but would typically comprise one or more of blended vegetable oil, olive oil, extra virgin olive oil, virgin olive oil, refined olive oil, blended olive oils, rapeseed oil, sunflower oil, soy bean oil, canola oil, cotton seed oil, corn oil, ground nut oil, grape seed oil, butter oil, safflower oil, flax oil, hemp oil, evening primrose oil, starflower oil, borage oil, avocado oil, pumpkin oil, wheatgerm oil, palm kernel oil, fractionated oil such as medium chain triglyceride, refined fractions of mineral oil or any other plant derived oil. In certain embodiments the oil component may comprise small levels of vegetable shortenings, butter and/or butter oil, hydrogenated and/or partially hydrogenated fats and/or oils such as palm oil and/or its fractions, coconut oil and/or its fractions and/or fatty acids such as palmitic acid and/or palmitates. These oils and fats are typically waxy, solid or semi-solid at temperatures around 7°C to 10°C and so will need to be predissolved in oils such as vegetable oils which are liquid at such temperatures. The oil component would typically include all oils present in the composition and would typically have the sunflower lecithin component and in particular oil-based sunflower lecithin component dissolved wholly or predominately therein.

In certain embodiments the oil component amounts to between 0.1% and 10% by weight of the composition and in others between 4% and 6%. In further embodiments, the oil component comprises between 10% and 60% by weight of the composition and in still further embodiments between 50% and 60% by weight.

In certain embodiments the aqueous component comprises between 30% and 80% by weight of the compositions. In particular embodiments the aqueous component comprises between 30% and 60% by weight of the composition and in further embodiments the aqueous component comprises between 75% and 90% by weight of the composition.

The aqueous component is water in certain embodiments, and in other embodiments comprises between 40% and 99% water, and in others between 40% and 60% water. In certain embodiments the aqueous component contains water soluble or generally water soluble components of the composition. In certain embodiments wherein the sunflower lecithin component comprises de-oiled lecithin, the de-oiled lecithin can be dissolved in the aqueous component and/or the oil component.

The compositions of the present invention are typically sprayable at temperatures of 5°C and above. More particularly, compositions of the present invention are sprayable at temperatures between 10°C and 50°C.

The compositions of the present invention are intended for use by a person during the preparation of food, which typically takes place in a kitchen or similar such environment. The compositions of the present invention are therefore sprayable at typical kitchen temperatures (5°C to 40°C). To be sprayable, the compositions are liquid at the aforesaid temperatures. The compositions would typically be sprayed during use through a hand-held dispensing container operable through a mechanical pump, pneumatic pump, aerosol or other finger-actuated device. Typically the composition would be sprayable through a device that has a spray orifice in the order of 0.1 mm to 0.5 mm, and more often 0.3 mm, although depending upon the calibration of the dispenser (e.g. the pressure of spray) and the viscosity of the composition, spraying through smaller or larger orifices is possible.

The compositions of the present invention typically have an overall viscosity of between 0.65 Pa*S (650 centipoise) and 1.35 Pa*S (1350 centipoise) at 20°C (68°F). Particular embodiments have a viscosity of between 0.65 Pa*S (650 centipoise) and 1.15 Pa*S (1150 centipoise) at 20°C (68°F). In other embodiments the viscosity is between 0.85 Pa*S (850 centipoise) and 1.35 Pa*S (1350 centipoise), in others between 0.75 Pa*S (750 centipoise) and 1.25 Pa*S (1250 centipoise) at 20°C (68°F) and in others between 1000 centipoise (1 Pa*S) and 1175 centipoise (1.175 Pa*S) at 20°C.

As indicated previously, the selective use of sunflower lecithin as the sole or major component of the sunflower lecithin component provides the compositions of the present invention with significant and unexpected advantages over the prior art. These include the observed significant improvements in the stability and reduction in the overall viscosity of the emulsion of the compositions relative to similar compositions comprising the equivalent amounts of soya lecithin.

Without wishing to be bound by theory, investigations carried out by the inventor to try to understand the reason behind the unexpected advantages presented by sunflower lecithin in the context of the present invention suggest that the level of phosphatidylchloine may be at least a contributing factor.

An analysis of the compositions of soya lecithin, rapeseed lecithin and sunflower lecithin suggests that the phosphatidylchloine content of sunflower lecithin can be in the order of 25% greater in sunflower lecithin than in soya lecithin and 35% greater in sunflower lecithin that in rapeseed lecithin.

This relatively high amount of phosphatidylchloine in the sunflower lecithin may be at least a contributing factor to the advantageous properties offered by the sunflower lecithin over the other two analysed.

Typically the compositions of the present invention are in the form of a generally homogenous emulsion. The sunflower lecithin acts as an emulsifier that has been shown to offer improved stability of the emulsion when compared to similar compositions comprising the equivalent amount of soya lecithin in place of the sunflower lecithin.

The compositions of the present invention are typically preserved and/or sterilised and/or aseptically processed and packed to provide them with a satisfactory shelf life.

In certain embodiments the composition comprises a culinary salt component in an amount between 0.1% and 25% by weight of the aqueous component. The culinary salt component would typically comprise sodium chloride or a composition comprised in part or predominately of sodium chloride. The culinary salt component can include potassium chloride and/or any other sodium chloride or culinary salt substitutes. Anti-caking agents can be provided. In certain embodiments the culinary salt component comprises between 2% and 8% by weight of the aqueous component.

In certain embodiments the culinary salt component comprises up to 10% by weight of the composition. The salt component can in certain embodiments comprise up to 25% by weight of sodium chloride, sodium chloride substitute, such as potassium chloride, calcium gluconate, calcium chloride, magnesium chloride or a combination thereof, and can be in the form of a solution.

In some embodiments the composition comprises an acidic component in an amount between 0.1% and 5% by weight of the aqueous component. The acidic component would typically comprise a food grade acid, such as acetic acid. Acids such as phosphoric acid and/or hydrochloric acid can be used, or any other suitable acid permitted for such use under prevailing laws and regulations. The acid component could be used as 100% acid or as a diluted acid such as an 80% to a 99% strength acid. In certain embodiments the acidic component may be considerably more dilute, such as to about 6% acetic acid with the acidic component comprising vinegar, which commercially typically ranges from 4% to 10% in acetic acid content for human consumption. In certain embodiments the acidic component comprises between 0.5% and 3% by weight and in certain embodiments between 0.5 and 4.5% by weight of the aqueous component.

In certain embodiments the acidic component can be particularly dilute, such as a vinegar and/or citric fruit juice such as lemon and/or lime juice, in which case the amount of acidic component in the composition would be proportionately greater to compensate for the degree of dilution to achieve the desired pH and/or preservation properties (particularly for acetic acid).

In certain embodiments the composition has a pH of 4.5 or less at 20°C. Certain compositions have a pH of 3.9, and typical compositions of the present invention have a pH of 3.0 and 3.9 at 20°C. In certain compositions the pH is between 2.8 and 4.2 at 20°C.

It has been found that in compositions where the acidic component and salt component are provided together, the composition has particularly good self preservation characteristics and acceptable flavour profile. It is the aqueous phase that typically suffers from spoilage by micro-organisms and yeast infection and the presence of a salt component and an acidic component in adequate quantities as specified herein has been found to be sufficient to provide compositions of the present invention with good self preservation characteristics, obviating the need for more conventional preservation techniques such as pasteurisation, sterilisation and irradiation to be employed. The salt component and acidic component also allow compositions to be formulated that are free of or relatively low in alcohol, which is typically otherwise used as a preservative and/or a thinner.

The compositions are preserved by alcohol, either alone or in combination with one or both of the aforesaid acidic component and salt component.

The alcohol is typically ethanol and present in amounts up to about 5% by volume over weight of the composition (about 8% to 12% v/w of the aqueous component). The alcohol may be used as a pure alcohol or as a diluted alcohol, such as 5% to 99% v/w alcohol. 96% v/w finds particular application. In such compositions, the alcohol would typically be comprised in the aqueous component.

Other alcohols could be used, such as iso-propyl alcohol, in addition to or instead of ethanol.

The self-preservation characteristics of compositions of the present invention mean that the compositions can be cold processed and cold packaged (typically at temperatures of less than 50°C), thus enabling relatively low cost and ease of manufacture compared to products that require additional preservation techniques, often at considerably higher temperatures, to be administered to offer satisfactory preservation against pathogenic and microbial spoilage.

The aforesaid preservation techniques may be supplemented by other techniques such as one or more of irradiation, pasteurisation, sterilisation, ultra pressure, sulphur dioxide or its compounds, chemical preservations such as the use of benzoic acid, sorbic acid (or their salts, such as potassium sorbate) and any other suitable methods and aseptic filling.

The compositions of the present invention can comprise an emulsifier (in addition to the sunflower lecithin component) in an amount up to between 0.1% and 15% by weight of the composition and in certain embodiments in amounts of between 2% and 5% by weight of the composition. The emulsifier can be a single type of emulsifier or a combination of one or more emulsifiers. The emulsifier can comprise a sugar ester, such as a sucrose ester and/or a derivative thereof, and/or a glyceride such as mono and/or diglyceride, or combinations thereof.

The compositions of the present invention can comprise further components, such as one or more of flavouring, flavour intensifier, flavour modifier, preservative, colouring, anti-oxidant (such as vitamin C and its compounds, tocopherol, BHA, BHT, BHQ) stabiliser (such as xanthan gum, carageenan or other alginates, hydrocolloid or modification, compounds or derivatives thereof), thickener, spice extract, plant extract, rosemary extract, green tea extract, tannic acid, acidity regulator, seasoning, aromatic, herb extract, chelating agent (such EDTA and/or its compounds, salts or derivatives of EDTA).

As stated above, the compositions of the present invention exhibit unexpectedly good sprayability characteristics due in the main to the unexpectedly low viscosities compared to the same compositions in which the sunflower lecithin component is simply replaced by a conventional lecithin component such as soya lecithin of comparable phosphatidylcholine content.

To illustrate this, comparative analysis has been carried out, measuring the viscosities of compositions made according to the following composition:

| **Composition Ingredient** | **% of total composition** |
|---|---|
| Sunflower oil | 56.76% |
| Water | 34.12% |
| Ethanol (96%) | 4.50% |
| Lecithin (liquid) | 4.53% |
| Tocopherol | 0.06% |
| Xanthan Gum (80 mesh) | 0.03% |

Compositions according to the above formulation were made using liquid soya lecithin. Separate compositions according to the same formulation were made in exactly the same way, as set out below, using liquid sunflower lecithin.

Part of the sunflower oil (approximately 15% to 20%) was heated to 45°C to 50°C. The lecithin was then mixed to dissolve in this part of the sunflower oil. The tocopherol was mixed with the remainder (80% to 85%)of the oil and the lecithin mix added to this. The water was heated to approximately 40°C and the ethanol was added. Xanthan gum was then mixed in the oil and the oil slowly added to the water, gradually working to produce an emulsion. The whole composition was then blended for about six minutes at high speed (1000 to 3000 rpm).

The viscosity of each composition was then measured using a Brookfield viscometer, Ref RTV using spindle number 3 at 20°C.

The viscosity of the composition when the lecithin component consisted of soya lecithin was typically 1650 centipoise (1.65 Pa*S) whereas the viscosity of the composition comprising the sunflower lecithin was significantly lower at typically 800 centipoise (0.80 Pa*S). This considerably lower viscosity helps to improve the sprayability of the compositions of the present invention and also enables satisfactory spraying at reduced pressure and can offer improved, more consistent and even spray patterns.

The presence of the xanthan gum in each composition had a similar effect of increasing the viscosity of each.

Similar comparative analyses were carried out with the following compositions:

| **Composition Ingredient** | **% of total of composition** |
|---|---|
| Sunflower oil | 56.91% |
| Water | 25.20% |
| Ethanol (96%) | 3.53% |
| Lecithin (liquid) | 4.48% |
| Tocopherol (concentrate) | 0.06% |
| Sucrose ester paste* | 9.82% |

| | |
|---|---|
| * Typically a premix of sucrose ester in alcohol. | |

The viscosity of the composition when the lecithin consisted of soya lecithin was typically 950 centipoise (0.95 Pa*S), which is comparatively high relative to the typical viscosity of the compositions wherein the lecithin component consists of sunflower lecithin which was measured at 700 centipoise (0.70 Pa*S).

| **Composition Ingredient** | **% of total of composition** |
|---|---|
| Sunflower oil | 56.75% |
| Water | 34.16% |
| Ethanol (96%) | 4.50% |
| Lecithin (liquid) | 4.53% |
| Antioxidant (tocopherol concentrate) | 0.06% |

The viscosity of the composition wherein the lecithin component consists of soya lecithin was typically 1100 centipoise (1.1 Pa*S) which is considerably greater than the measured viscosity of the composition wherein the lecithin is sunflower lecithin, which was typically 550 centipoise (0.55 Pa*S).

All of the foregoing viscosity measurements, and generally within the specification were measured at 20°C unless otherwise stated.

These comparative analyses illustrate the clear, unexpected and advantageous relatively low viscosity characteristics of the compositions of the present invention, which render the compositions relatively easy to spray, thus enabling relatively low pressure, relatively inexpensive spray mechanisms to be used to spray them. Indeed, it is found that simple, finger actuated mechanical spray pump devices provide ample pressure for the successful and satisfactory spraying of the compositions of the present invention, thus obviating the need to use pre-pressurised systems that often use flammable and polluting propellants.

Also disclosed is a method of manufacturing a composition comprising an oil component in an amount 0.1% to 70%, an aqueous component in an amount 25% to 98% and a sunflower lecithin component in an amount 0.1% to 15%, the method comprising dissolving the sunflower lecithin component in some or all of the oil component at a temperature of between 45°C and 50°C to form a solution and/or an admix, and then mixing the admix and any remaining oil component with the aqueous component to form a substantially homogenous emulsion.

Typically the sunflower lecithin component would be dissolved in a small portion of the oil component typically approximately one tenth of the volume of the overall oil component. Dissolving the lecithin at temperatures within the range 45°C to 50°C can be important in ensuring complete and rapid dissolving of the sunflower lecithin without imparting any adverse effects on the oil component or sunflower lecithin component and avoiding the need for temperatures at which the materials, and in particular the oils, present a potential fire and/or burning hazard.

The remainder of the oil component can have other oil soluble components mixed in at temperatures below 45°C. In certain other embodiments some or all of the oil soluble components can be mixed into the oil portion along with the sunflower lecithin component.

The aqueous component could typically be heated to approximately 40°C. The preservative components, such as the acidic component, salt component, alcohol would generally be evenly mixed within the aqueous component. Other components soluble in the aqueous component would typically be added at this stage.

The portion of oil component comprising the dissolved lecithin is thoroughly mixed into the remainder of the oil component and then the aqueous component is added, typically slowly to the oil component. Any added stabilisers and emulsifiers are typically added shortly before, during or immediately after the mixing of the aqueous component with the oil component. In embodiments comprising sucrose ester as emulsifier the sucrose ester is typically dissolved in some or all of any alcohol present in the composition prior to introduction to the remainder of the composition.

The invention also provides a method of dispensing the sprayable liquid edible compositions described above, the method comprising spraying a predetermined amount of composition with a known calorific content.

The invention further provides a dispenser containing a bulk supply of sprayable liquid edible composition as described above, the dispenser being arranged to spray upon actuation a predetermined amount of composition with a known calorific content.

Below is a selection of examples of compositions according to the present invention.

**Example 1**

| **Composition Ingredient** | **% of total of composition (unless otherwise specified)** |
|---|---|
| Sunflower Oil (Refined) | 58.5% |
| Water | 32.73% |
| Ethanol (96%) | 4.3% |
| Sunflower Lecithin | 4.3% |
| Tocopherol concentrate | 0.06% |

The various components are mixed generally according to the methodology defined above.

The composition produced has excellent stability and sprayable characteristics. The viscosity of the composition is typically in the range 0.65 to 1.15 Pa*S (650 to 1150 centipoise) at 20°C (68°F) and the pH is in the range 6.4 to 7.4.

The alcohol provides the means of preservation. One or more of the other preservation techniques discussed above can be used to complement or replace.

**Example 2**

| **Composition Ingredient** | **% of total of composition (unless otherwise specified)** |
|---|---|
| Extra virgin olive oil | 58.4% |
| Water | 32.73% |
| Ethanol (96%) | 4.24% |
| Sunflower lecithin | 3.67% |
| Tocopherol concentrate | 0.06% |

This composition has a pH of between 6.25 and 7.25 and a viscosity of 0.85 to 1.35 Pa*S (850 to 1350 centipoise) at 20°C (68°F).

**Example 3**

| **Composition Ingredient** | **% of total of composition (unless otherwise specified)** |
|---|---|
| Sunflower oil | 57.32% |
| Water | 32.29% |
| Ethanol (96%) | 4.29% |
| Sunflower lecithin | 5.23% |
| Butter flavouring | 0.78% |
| Tocopherol concentrate | 0.09% |

Compositions produced according to this recipe typically have a pH in the order of 5.0 to 6.0 and a viscosity of 0.75 to 1.25 Pa*S (750 to 1250 centipoise) at approximately 20°C (68°F).

**Example 4**

| **Composition Ingredient** | **% of total of composition (unless otherwise specified)** |
|---|---|
| Plant-derived oil (Seed Oil) | 6.00% |
| Powdered sunflower lecithin | 2.00% |
| Ethanol (96%) | 4.80% |
| Water | 86.45% |
| Antioxidant (tocopherol concentrate) | 0.05% |
| Potassium sorbate (preservative) | 0.10% |
| Lactic acid (acidulant) | 0.60% |

**Example 5**

| **Composition Ingredient** | **% of total of composition (unless otherwise specified)** |
|---|---|
| Plant-derived oil | 6.00% |
| Liquid sunflower lecithin | 2.00% |
| Ethanol (96%) | 4.80% |
| Water | 86.45% |
| Antioxidant (tocopherol concentrate) | 0.05% |
| Potassium sorbate | 0.10% |
| Lactic acid | 0.60% |

**Reference Example 6**

| **Composition Ingredient** | **% of total of composition (unless otherwise specified)** |
|---|---|
| Sunflower oil | 70.00% |
| Liquid sunflower lecithin | 4.30% |
| Water | 18.00% |
| Xanthan gum | 0.05% |
| Antioxidant | 0.05% |
| Acetic acid (80%) | 1.00% |
| Salt | 6.10% |
| Pea protein (powder) | 0.50% |

**Example 7**

| **Composition Ingredient** | **% of total of composition (unless otherwise specified)** |
|---|---|
| Olive oil (any grade) | 82.00% |
| Sunflower lecithin | 2.00% |
| Ethanol (96%) | 4.80% |
| Water | 11.15% |
| Antioxidant | 0.05% |

**Example 8**

| **Composition Ingredient** | **% of total of composition (unless otherwise specified)** |
|---|---|
| Olive/Sunflower oil blend | 77.00% |
| Sunflower lecithin (liquid) | 2.00% |
| Ethanol (96%) | 4.80% |
| Water | 11.15% |
| Antioxidant (BHA, BHT, BHQ) | 0.05% |
| Medium chain triglyceride (such as light palm oil fraction) | 5.00% |

**Reference Example 9**

| **Composition Ingredient** | **% of total of composition (unless otherwise specified)** |
|---|---|
| Edible Oil Blend | 55.00% |
| Sunflower lecithin | 3.00% |
| Water | 41.3% |
| Potassium sorbate | 0.10% |
| Lactic acid | 0.60% |

This composition is typically subjected to external preservation processes such as sterilisation and pasteurisation, aseptic filling (amongst others) and is typically sprayed using pre-pressurised aerosol spray dispensers.

**Example 10**

| **Composition Ingredient** | **% of total of composition (unless otherwise specified)** |
|---|---|
| Sunflower oil | 56.76% |
| Water | 34.12% |
| Ethanol (96%) | 4.50% |
| Sunflower lecithin (liquid) | 4.53% |
| Antioxidant (rosemary extract) | 0.06% |
| Xanthan gum (80 mesh) | 0.03% |

The viscosity of the composition of Example 10 was measured as typically 900 centipoise (0.9 Pa*S) at 20°C. The same composition having 4.53% of soya lecithin (liquid) instead of the same amount of sunflower lecithin has a viscosity typically of 1150 centipoise (1.15 Pa*S), considerably greater, thus rendering such a composition more difficult to spray than the composition of the present invention.

**Reference Example 11**

| **Composition Ingredient** | **% of total of composition (unless otherwise specified)** |
|---|---|
| Rape seed oil | 49.28 |
| Water | 34.36 |
| Soya lecithin (liquid) | 4.00 |
| Caramel (wheat-free) | 1.20 |
| Hydrolysed vegetable protein (liquid soya) | 2.75 |
| Soluble Spice flavouring | 1.00 |
| Tocopherol | 0.05 |
| Acetic acid (80%) | 0.86 |
| Salt (NaCl) | 4.38 |
| Sugar, white granulated | 1.50 |
| Xanthan gum powder (80 mesh) | 0.12 |
| Pea protein | 0.50 |

The composition of Example 11 typically has a viscosity in the range 2750 to 3250 centipoise (2.75 to 3.25 Pa*S) at 20°C.

The spice blend and other ingredients can be selected to give the composition a desired flavour profile, such as those of Chinese or Oriental-style flavours.

Comparative samples were made using exactly the same methodology and relative amounts as set out in Example 11 above, but replacing the liquid soya lecithin with liquid sunflower lecithin, and the viscosities of the sample made were measured using the same apparatus and under the same conditions as those under which the viscosities were measured for the compositions of Example 11.

The results are remarkable. The viscosities of those compositions comprising the sunflower lecithin were between 1000 and 1175 centipoise (1 Pa*S and 1.75 Pa*S), very markedly lower than the viscosities of the soya lecithin compositions.

This is, as mentioned before, a remarkable phenomenon and one which affords the compositions of the present invention with considerable advantage over similar compositions comprising conventional soya lecithin. These advantages include:
(a) Better spray characteristics. The sunflower lecithin compositions exhibited broader spray patterns and better, more uniform dispersion when sprayed. When these compositions were sprayed using a finger actuated, hand-held mechanical pump dispenser at a temperature of about 20°C, the width of spray pattern at a distance of approximately 15 cm from the spray nozzle of the dispenser was 5 cm to 10 cm for the soya lecithin compositions and 10 cm to 15 cm for the sunflower lecithin based compositions. Thus broader application and potentially less product needed for use, which has benefits of economy and also reduces the number of calories the compositions introduce to a foodstuff.
(b) Less propellant pressure and force needed to spray, thus enabling relatively low pressure dispensers to be used, thus requiring less effort from a user when dispensed from mechanical pump dispensers or requiring the use of less quantity of propellant in aerosol or aerosol-type dispensers.

It has also been found the emulsion produced using the sunflower lecithin is more stable, having greater opacity due to a better fragmentation of the oil droplets.

**Reference Example 12**

| **Composition Ingredient** | **% of total of composition (unless otherwise specified)** |
|---|---|
| Water | 92.5% |
| Ethanol | 4.8% |
| Sunflower lecithin (de-oiled) | 2.0% |
| Potassium sorbate | 0.1% |
| Lactic acid | 0.6% |

**Reference Example 13**

| **Composition Ingredient** | **% of total of composition (unless otherwise specified)** |
|---|---|
| Water | 89.6% |
| Ethanol | 4.8% |
| Salt | 3.0% |
| Lactic acid | 0.6% |
| Sunflower lecithin (de-oiled) | 2.0% |

The compositions of Examples 12 and 13 are effectively self-preserving, such that they are suitable for cold packing, with preservation treatment such as pasteurisation and sterilisation not needed.

**Reference Example 14**

| **Composition Ingredient** | **% of total of composition (unless otherwise specified)** |
|---|---|
| Water | 98% |
| Sunflower lecithin (de-oiled) | 2.0% |
| Water | 97.3% |
| Sunflower lecithin (de-oiled) | 2.0% |
| Acidulant | 0.7% |

Example 14 would typically be subjected to further preservation treatment such as pasteurisation and/or sterilisation which could be incorporated in an aseptic filling/packing process, to give it a satisfactory shelf life. Any suitable preservation technique can be employed which preferably does not cause undesirable deterioration of the product such as coagulation of the lecithin.

Each of the compositions of Examples 11 to 14 are essentially devoid of an oil component, thus rendering them typically of relatively low calorific content when compared to other embodiments of the present invention which comprise an oil component.

Typically for compositions devoid of an oil component, the aqueous component, which can be 100% water or water with selective additives (as discussed hereabove), is present in an amount 75% to 99.5% of the total weight of the composition.

In certain embodiments the aqueous component is present in amounts 80% to 98.9% and in others 95% to 99% by weight of the total composition.

The sunflower lecithin in such embodiments is typically de-oiled to help with the stability of the composition, but other oil-containing forms of sunflower lecithin can be used, in which case one or more of an emulsifier or stabiliser may be used to assist stability. The sunflower lecithin component would be present in amount between 0.5% and 15% in such embodiments.

## Claims

1. A sprayable liquid edible composition comprising an oil component in an amount 0.1% to 70%, an aqueous component in an amount 25% to 98.9%, a sunflower lecithin component in an amount 0.1% to 15% and about 8% to 12% by volume over weight (v/w) of the aqueous component of alcohol and the alcohol comprising no more than 5% v/w of the composition.

2. A sprayable liquid edible composition as claimed in claim 1, in which the sunflower lecithin component comprises one or more of natural sunflower lecithin, synthetic sunflower lecithin, a modification, derivative or compound thereof, hydrolysed, hydroxylated, acetylated or methoxylated sunflower lecithin.

3. A sprayable liquid edible composition as claimed in any preceding claim, in which the sunflower lecithin component is liquid at temperatures between 10°C and 25°C.

4. A sprayable liquid edible composition as claimed in any of claims 1 to 2, in which the sunflower lecithin component is non-liquid at temperatures between 10°C and 25°C.

5. A sprayable liquid edible composition as claimed in claim 4, in which the sunflower lecithin component is in the form of a paste.

6. A sprayable liquid edible composition as claimed in claim 4, in which the sunflower lecithin component is a powder.

7. A sprayable liquid edible composition as claimed in any preceding claim, in which the sunflower lecithin component is de-oiled.

8. A sprayable liquid edible composition as claimed in any preceding claim, in which the sunflower lecithin component is present in an amount between 1% and 10%, by weight of the composition.

9. A sprayable liquid edible composition as claimed in any preceding claim, in which the sunflower lecithin component is present in an amount between 2% and 6%.

10. A sprayable liquid edible composition as claimed in any preceding claim, in which the sunflower lecithin component has a phosphatidylcholine content of between 15% and 30%.

11. A sprayable liquid edible composition as claimed in any preceding claim, in which the sunflower lecithin component acts as a non-stick agent within the composition, enabling the composition to be used as a sprayable non-stick cooking composition.

12. A sprayable liquid edible composition as claimed in any preceding claim, in which the oil component comprises between 0.1% and 10% by weight of the composition.

13. A sprayable liquid edible composition as claimed in any preceding claim, in which the oil component comprises between 4% and 6% by weight of composition.

14. A sprayable liquid edible composition as claimed in any of claims 1 to 11, in which the oil component comprises between 10% and 60% by weight of the composition.

15. A sprayable liquid edible composition as claimed in any of claims 1 to 11, and 14, in which the oil component comprises between 50% and 60% by weight.

16. A sprayable liquid edible composition as claimed in any preceding claim, in which the aqueous component comprises between 30% and 80% by weight of the composition.

17. A sprayable liquid edible composition as claimed in any preceding claim, in which the aqueous component comprises between 30% and 60% by weight of the composition.

18. A sprayable liquid edible composition as claimed in any preceding claim, in which the aqueous component comprises between 75% and 90% by weight of the composition.

19. The sprayable liquid edible composition as claimed in any preceding claim, in which the composition has a viscosity of between 0.65 Pa*S (650 centipoise) and 1.35 Pa*S (1350 centipoise),

20. A sprayable liquid edible composition as claimed in any preceding claim, in which the composition has a viscosity of between 0.65 Pa*S (650 centipoise) and 1.15 Pa*S (1150 centipoise) at 20°C (68°F).

21. A sprayable liquid edible composition as claimed in any preceding claims, in which the composition has a viscosity of between 0.85 Pa*S (850 centipoise) and 1.35 Pa*S (1350 centipoise).

22. A sprayable liquid edible composition as claimed in any preceding claims, in which the composition has a viscosity of between 0.75 Pa*S (750 centipoise) and 1.25 Pa*S (1250 centipoise) at 20°C (68°F).

23. A sprayable liquid edible composition as claimed in any preceding claims, in which the composition has a viscosity of between 1 Pa*S (1000 centipoise) and 1.175 Pa*S (1175 centipoise) at 20°C.

24. A sprayable liquid edible composition as claimed in any preceding claim, in which the composition comprises a culinary salt component present in an amount between 0.1 % and 25% by weight of the aqueous component.

25. A sprayable liquid edible composition as claimed in any preceding claim, in which the composition comprises an acidic component in an amount between 0.01% and 5% by weight of the aqueous component.

26. A sprayable liquid edible composition as claimed in any preceding claim, in which the composition has a pH of 4.5 or less at 20°C.

27. A sprayable liquid edible composition as claimed in any preceding claim, in which the composition has a pH of 3.9 or less at 20°C.

28. A sprayable liquid edible composition as claimed in any preceding claim, in which the composition comprises an emulsifier present in an amount between 0.1% and 15% by weight of the composition.

29. A sprayable liquid edible composition as claimed in any preceding claim, in which the composition comprises an emulsifier present in amounts 2% to 5% by weight of the composition.

30. A sprayable liquid edible composition as claimed in any proceeding claim, in which the alcohol is one of pure alcohol, 5% to 99% v/w alcohol, or 96% v/w alcohol.

31. A method of dispensing a sprayable liquid edible composition as claimed in any preceding claim, the method comprising spraying a predetermined amount of composition with a known calorific content.

32. A dispenser containing a bulk supply of sprayable liquid edible composition as claimed in any of claims 1 to 30, the dispenser being arranged to spray upon actuation a predetermined amount of composition with a known calorific content.

## Patentansprüche

1. Sprühbare essbare Flüssigzusammensetzung aufweisend eine Ölkomponente in einer Menge von 0.1% bis 70%, eine wässrige Komponente in einer Menge von 25% bis 98.9%, eine Sonnenblumenlecithin Komponente in einer Menge von 0.1% bis 15% und ungefähr 8% bis 12% Volumen über Masse (v/w) der wässrigen Komponente von Alkohol und der Alkohol nicht mehr als 5% v/w der Zusammensetzung umfasst.

2. Sprühbare essbare Flüssigzusammensetzung wie in Anspruch 1 beansprucht, in der die Sonnenblumenlecithin Komponente ein oder mehrere aus natürliches Sonnenblumenlecithin, synthetisches Sonnenblumenlecithin, eine Modifikation, Derivat oder Mischung hiervon, hydrolisiertes, hydroxyliertes, acetyliertes oder methoxyliertes Sonnenblumenlecithin aufweist.

3. Sprühbare essbare Flüssigzusammensetzung wie in einem der vorhergehenden Ansprüche beansprucht, in der die Sonnenblumenlecithin Komponente bei Temperaturen zwischen 10°C und 25°C flüssig ist.

4. Sprühbare essbare Flüssigzusammensetzung wie in einem der Ansprüche 1 bis 2 beansprucht, in der in der die Sonnenblumenlecithin Komponente bei Temperaturen zwischen 10°C und 25°C nicht-flüssig ist.

5. Sprühbare essbare Flüssigzusammensetzung wie in Anspruch 4 beansprucht, in der die Sonnenblumenlecithin Komponente die Form einer Paste hat.

6. Sprühbare essbare Flüssigzusammensetzung wie in Anspruch 4 beansprucht, in der die Sonnenblumenlecithin Komponente ein Pulver ist.

7. Sprühbare essbare Flüssigzusammensetzung wie in einem der vorhergehenden Ansprüche beansprucht, in der die Sonnenblumenlecithin Komponente entölt ist.

8. Sprühbare essbare Flüssigzusammensetzung wie in einem der vorhergehenden Ansprüche beansprucht, in der die Sonnenblumenlecithin Komponente in einer Menge zwischen 1 Gew.-% bis 10 Gew.-% der Zusammensetzung vorhanden ist.

9. Sprühbare essbare Flüssigzusammensetzung wie in einem der vorhergehenden Ansprüche beansprucht, in der die Sonnenblumenlecithin Komponente in einer Menge zwischen 2% bis 6% vorhanden ist.

10. Sprühbare essbare Flüssigzusammensetzung wie in einem der vorhergehenden Ansprüche beansprucht, in der die Sonnenblumenlecithin Komponente einen Phosphatidylcholine-Anteil von zwischen 15% und 30% hat.

11. Sprühbare essbare Flüssigzusammensetzung wie in einem der vorhergehenden Ansprüche beansprucht, in der die Sonnenblumenlecithin Komponente in der Zusammensetzung als Antihaftmittel wirkt, um es der Zusammensetzung zu ermöglichen als sprühbare Antihaft-Kochzusammensetzung verwendet zu werden.

12. Sprühbare essbare Flüssigzusammensetzung wie in einem der vorhergehenden Ansprüche beansprucht, in der die Ölkomponente zwischen 0.1 Gew.-% und 10 Gew.-% der Zusammensetzung umfasst.

13. Sprühbare essbare Flüssigzusammensetzung wie in einem der vorhergehenden Ansprüche beansprucht, in der die Ölkomponente zwischen 4 Gew.-% und 6 Gew.-% der Zusammensetzung umfasst.

14. Sprühbare essbare Flüssigzusammensetzung wie in einem der Ansprüche 1 bis 11 beansprucht, in der die Ölkomponente zwischen 10 Gew.-% und 60 Gew.-% der Zusammensetzung umfasst.

15. Sprühbare essbare Flüssigzusammensetzung wie in einem der Ansprüche 1 bis 11, und 14 beansprucht, in der die Ölkomponente zwischen 50 Gew.-% und 60 Gew.-% der Zusammensetzung umfasst.

16. Sprühbare essbare Flüssigzusammensetzung wie in einem der vorhergehenden Ansprüche beansprucht, in der die wässrige Komponente zwischen 30 Gew.-% und 80 Gew.-% der Zusammensetzung umfasst.

17. Sprühbare essbare Flüssigzusammensetzung wie in einem der vorhergehenden Ansprüche beansprucht, in der die wässrige Komponente zwischen 30 Gew.-% und 60 Gew.-% der Zusammensetzung umfasst.

18. Sprühbare essbare Flüssigzusammensetzung wie in einem der vorhergehenden Ansprüche beansprucht, in der die wässrige Komponente zwischen 75 Gew.-% und 90 Gew.-% der Zusammensetzung umfasst.

19. Sprühbare essbare Flüssigzusammensetzung wie in einem der vorhergehenden Ansprüche beansprucht, in der die Zusammensetzung eine Viskosität von zwischen 0.65 Pa*S (650 centipoise) und 1.35 Pa*S (1350 centipoise) hat.

20. Sprühbare essbare Flüssigzusammensetzung wie in einem der vorhergehenden Ansprüche beansprucht, in der die Zusammensetzung eine Viskosität von zwischen 0.65 Pa*S (650 centipoise) und 1.15 Pa*S (1150 centipoise) bei 20°C (68°F) hat.

21. Sprühbare essbare Flüssigzusammensetzung wie in einem der vorhergehenden Ansprüche beansprucht, in der die Zusammensetzung eine Viskosität von zwischen 0.85 Pa*S (850 centipoise) und 1.35 Pa*S (1350 centipoise) hat.

22. Sprühbare essbare Flüssigzusammensetzung wie in einem der vorhergehenden Ansprüche beansprucht, in der die Zusammensetzung eine Viskosität von zwischen 0.75 Pa*S (750 centipoise) und 1.25 Pa*S (1250 centipoise) bei 20°C (68°F) hat.

23. Sprühbare essbare Flüssigzusammensetzung wie in einem der vorhergehenden Ansprüche beansprucht, in der die Zusammensetzung eine Viskosität von zwischen 1 Pa*S (1000 centipoise) und 1.175 Pa*S (1175 centipoise) bei 20°C hat.

24. Sprühbare essbare Flüssigzusammensetzung wie in einem der vorhergehenden Ansprüche beansprucht, in der die Zusammensetzung eine Kochsalz-Komponente in einer Menge zwischen 0.1 Gew.-% und 25 Gew.-% der wässrigen Komponente umfasst.

25. Sprühbare essbare Flüssigzusammensetzung wie in einem der vorhergehenden Ansprüche beansprucht, in der die Zusammensetzung eine Säure-Komponente in einer Menge zwischen 0.01 Gew.-% und 5 Gew.-% der wässrigen Komponente umfasst.

26. Sprühbare essbare Flüssigzusammensetzung wie in einem der vorhergehenden Ansprüche beansprucht, in der die Zusammensetzung einen pH-Wert von 4.5 oder niedriger bei 20°C hat.

27. Sprühbare essbare Flüssigzusammensetzung wie in einem der vorhergehenden Ansprüche beansprucht, in der die Zusammensetzung einen pH-Wert von 3.9 oder niedriger bei 20°C hat.

28. Sprühbare essbare Flüssigzusammensetzung wie in einem der vorhergehenden Ansprüche beansprucht, in der die Zusammensetzung einen Emulgator umfasst, der in einer Menge zwischen 0.1 Gew.-% bis 15 Gew.-% der Zusammensetzung vorhanden ist.

29. Sprühbare essbare Flüssigzusammensetzung wie in einem der vorhergehenden Ansprüche beansprucht, in der die Zusammensetzung einen Emulgator umfasst, der in Mengen von 2 Gew.-% bis 5 Gew.-% der Zusammensetzung vorhanden ist.

30. Sprühbare essbare Flüssigzusammensetzung wie in einem der vorhergehenden Ansprüche beansprucht, in der der Alkohol einer aus purem Alkohol, 5% bis 99% v/w Alkohol, oder 96% v/w Alkohol ist.

31. Verfahren zur Verteilung einer sprühbaren essbaren Flüssigzusammensetzung wie in einem der vorhergehenden Ansprüche beansprucht, das Verfahren umfassend das Sprühen einer vorbestimmten Menge der Zusammensetzung mit einem bekannten Brenngehalt.

32. Verteiler beeinhaltend einen großen Vorrat an sprühbarer essbarer Zusammensetzung wie in einem der Ansprüche 1 bis 30 beansprucht, der Verteiler ist eingerichtet, um bei Betätigung eine vorbestimmten Menge der Zusammensetzung mit einem bekannten Brenngehalt zu versprühen.

## Revendications

1. Composition comestible liquide pulvérisable comprenant un composant huileux en une quantité allant de 0,1% à 70%, un composant aqueux en une quantité allant de 25% à 98,9%, un composant de lécithine de tournesol en une quantité allant de 0,1% à 15% et environ 8% à 12% en volume sur le poids (v / p) du composant aqueux d'alcool et l'alcool ne constituant pas plus de 5% en poids de la composition.

2. Composition comestible liquide pulvérisable selon la revendication 1, dans laquelle le composant de lécithine de tournesol comprend un ou plusieurs des éléments suivants : une lécithine de tournesol naturelle, une lécithine de tournesol synthétique, une modification, un dérivé ou un composé de celles-ci, une lécithine de tournesol hydrolysée, hydroxylée, acétylée ou méthoxylée.

3. Composition comestible liquide pulvérisable selon l'une quelconque des revendications précédentes, dans laquelle le composant de lécithine de tournesol est liquide à des températures comprises entre 10 °C et 25 °C.

4. Composition comestible liquide pulvérisable selon l'une quelconque des revendications 1 à 2, dans laquelle le composant de lécithine de tournesol est non liquide à des températures comprises entre 10 °C et 25 °C.

5. Composition comestible liquide pulvérisable selon la revendication 4, dans laquelle le composant de lécithine de tournesol se présente sous la forme d'une pâte.

6. Composition comestible liquide pulvérisable selon la revendication 4, dans laquelle le composant de lécithine de tournesol est une poudre.

7. Composition comestible liquide pulvérisable selon l'une quelconque des revendications précédentes, dans laquelle le composant de lécithine de tournesol est déshuilé.

8. Composition comestible liquide pulvérisable selon l'une quelconque des revendications précédentes, dans laquelle le composant de lécithine de tournesol est présent en une quantité comprise entre 1% et 10% en poids de la composition.

9. Composition comestible liquide pulvérisable selon l'une quelconque des revendications précédentes, dans laquelle le composant de lécithine de tournesol est présent en une quantité comprise entre 2% et 6%.

10. Composition comestible liquide pulvérisable selon l'une quelconque des revendications précédentes, dans laquelle le composant de lécithine de tournesol a une teneur en phosphatidylcholine comprise entre 15% et 30%.

11. Composition comestible liquide pulvérisable selon l'une quelconque des revendications précédentes, dans laquelle le composant de lécithine de tournesol agit comme un agent anti-adhésif dans la composition, permettant à la composition d'être utilisée comme composition de cuisson antiadhésive pulvérisable.

12. Composition comestible liquide pulvérisable selon l'une quelconque des revendications précédentes, dans laquelle le composant huileux constitue entre 0,1% et 10% en poids de la composition.

13. Composition comestible liquide pulvérisable selon l'une quelconque des revendications précédentes, dans laquelle le composant huileux constitue entre 4% et 6% en poids de la composition.

14. Composition comestible liquide pulvérisable selon l'une quelconque des revendications 1 à 11, dans laquelle le composant huileux constitue entre 10% et 60% en poids de la composition.

15. Composition comestible liquide pulvérisable selon l'une quelconque des revendications 1 à 11 et 14, dans laquelle le composant huileux constitue entre 50% et 60% en poids.

16. Composition comestible liquide pulvérisable selon l'une quelconque des revendications précédentes, dans laquelle le composant aqueux constitue entre 30% et 80% en poids de la composition.

17. Composition comestible liquide pulvérisable selon l'une quelconque des revendications précédentes, dans laquelle le composant aqueux constitue entre 30% et 60% en poids de la composition.

18. Composition comestible liquide pulvérisable selon l'une quelconque des revendications précédentes, dans laquelle le composant aqueux constitue entre 75% et 90% en poids de la composition.

19. Composition alimentaire comestible pulvérisable selon l'une quelconque des revendications précédentes, dans laquelle la composition a une viscosité comprise entre 0,65 Pa·S (650 centipoises) et 1,35 Pa·S (1350 centipoises).

20. Composition comestible liquide pulvérisable selon l'une quelconque des revendications précédentes, dans laquelle la composition a une viscosité comprise entre 0,65 Pa·S (650 centipoises) et 1,15 Pa·S (1150 centipoises) à 20 °C (68 °F).

21. Composition comestible liquide pulvérisable selon l'une quelconque des revendications précédentes, dans laquelle la composition a une viscosité comprise entre 0,85 Pa·S (850 centipoises) et 1,35 Pa·S (1350 centipoises).

22. Composition comestible liquide pulvérisable selon l'une quelconque des revendications précédentes, dans laquelle la composition a une viscosité comprise entre 0,75 Pa·S (750 centipoises) et 1,25 Pa·S (1250 centipoises) à 20 °C (68 °F).

23. Composition comestible liquide pulvérisable selon l'une quelconque des revendications précédentes, dans laquelle la composition a une viscosité comprise entre 1 Pa·S (1000 centipoises) et 1,175 Pa·S (1175 centipoises) à 20 °C.

24. Composition comestible liquide pulvérisable selon l'une quelconque des revendications précédentes, dans laquelle la composition comprend un composant de sel culinaire présent en une quantité comprise entre 0,1% et 25% en poids du composant aqueux.

25. Composition comestible liquide pulvérisable selon l'une quelconque des revendications précédentes, dans laquelle la composition comprend un composant acide en une quantité comprise entre 0,01% et 5% en poids du composant aqueux.

26. Composition comestible liquide pulvérisable selon l'une quelconque des revendications précédentes, dans laquelle la composition a un pH de 4,5 ou moins à 20 °C.

27. Composition comestible liquide pulvérisable selon l'une quelconque des revendications précédentes, dans laquelle la composition a un pH de 3,9 ou moins à 20 °C.

28. Composition comestible liquide pulvérisable selon l'une quelconque des revendications précédentes, dans laquelle la composition comprend un émulsifiant présent en une quantité comprise entre 0,1% et 15% en poids de la composition.

29. Composition comestible liquide pulvérisable selon l'une quelconque des revendications précédentes, dans laquelle la composition comprend un émulsifiant présent en des quantités allant de 2% à 5% en poids de la composition.

30. Composition comestible liquide pulvérisable selon l'une quelconque des revendications précédentes, dans laquelle l'alcool est un des éléments suivants : un alcool pur, un alcool à 5% à 99% en (v / p) ou un alcool à 96% (v / p).

31. Procédé de distribution d'une composition comestible liquide pulvérisable selon l'une quelconque des revendications précédentes, le procédé comprenant la pulvérisation d'une quantité prédéterminée de composition avec une teneur calorifique connue.

32. Distributeur contenant une réserve de composition comestible liquide pulvérisable selon l'une quelconque des revendications 1 à 30, le distributeur étant agencé pour pulvériser, lors de son actionnement, une quantité prédéterminée de composition avec une teneur calorifique connue.
